Europäisches Patentamt

European Patent Office

Office européen des brevets

(19)

(11) Publication number: **0 409 136 A2**

# EUROPEAN PATENT APPLICATION

(12)

(21) Application number: 90113602.8

(22) Date of filing: 16.07.90

(51) Int. Cl.5: **C08F 4/40**, C08F 2/10

(30) Priority: 18.07.89 US 382156
14.08.89 US 393495

(43) Date of publication of application:
**23.01.91 Bulletin 91/04**

(84) Designated Contracting States:
**BE DE FR GB IT NL**

(71) Applicant: THE DOW CHEMICAL COMPANY
2030 Dow Center Abbott Road P.O. Box 1967
Midland Michigan 48640-1967(US)

(72) Inventor: Buchholz, Frederic L.
256 Youngs Court
Midland, Michigan 48640(US)
Inventor: Graham, Andrew T.
2214 Wyllys Court
Midland, Michigan 48640(US)
Inventor: Johnson, Thomas C.
1908 Airfield
Midland, Michigan 48640(US)

(74) Representative: Sternagel, Hans-Günther, Dr.
et al
Patentanwälte Dr. Michael Hann Dr. H.-G.
Sternagel Sander Aue 30
D-5060 Bergisch Gladbach 2(DE)

(54) Erythorbate as part of a redox initiator system for the polymerization of water-swellable polymers.

(57) This invention relates to a process for polymerizing an aqueous solution of an $\alpha,\beta$-ethylenically unsaturated monomer and at least one crosslinking monomer to produce a water-swellable polymer using erythorbate as a component of a redox initiator system. The use of erythorbate as a component of a redox initiator system for the polymerization allows for controlling the temperature of initiation so as to decrease heat release during polymerization without sacrificing excellent polymer properties.

EP 0 409 136 A2

# A PROCESS FOR USING ERYTHORBATE AS A COMPONENT OF A REDOX INITIATOR SYSTEM FOR THE POLYMERIZATION OF WATER-SWELLABLE POLYMERS

This invention relates to a process for polymerizing an aqueous solution of an $\alpha,\beta$-ethylenically unsaturated monomer and at least one crosslinking monomer to produce a water-swellable polymer.

Polymers which form hydrogels are used in fluid absorbing products such as disposable diapers, incontinent devices and sanitary napkins and are well known in the art. These polymers can be prepared by polymerization of $\alpha,\beta$-ethylenically unsaturated monomers with crosslinking agents. The development of improvements in the processes for preparing these water-swellable polymers is desirable to produce improved products, eliminate by-products and increase production capacity. The improvements in the processes however, should not sacrifice free swell capacity (FSC) and water-soluble polymer content properties of the polymer.

A preferred initiator system for the polymerization of the monomers to make the hydrogel of the invention is a redox initiator system. However, the system, comprising redox pairs, is typically temperature sensitive and requires initiation of the polymerization at an elevated temperature which will require heat removal from the reaction by some means to avoid adversely affecting the quality of the polymer product. It would be desirable to initiate the polymerization at a lower temperature as a means of protecting the quality of the hydrogel. Also, in many that have limited heat removal capacities, initiating at a lower temperature may provide opportunity for increasing production rates. Thus, the temperature insensitivity of the redox pair would be advantageous for increasing production of the reactors.

Accordingly, the present invention is an improved process for producing a water-swellable polymer by polymerizing an aqueous solution of an $\alpha,\beta$-ethylenically unsaturated monomer and at least one crosslinking monomer, the process comprising initiating the polymerization with a redox initiator system comprising ascorbic acid, erythorbic acid or their metal salts.

The operable water-soluble, $\alpha,\beta$-ethylenically unsaturated monomers are those which are capable of reaction by vinyl-addition polymerization in an aqueous solution with a crosslinking monomer to produce a water-swellable, and/or lightly crosslinked hydrophilic gel polymer. The crosslinked structure may be obtained by the copolymerization of the water-soluble monomer and a crosslinking monomer possessing at least two polymerizable double bonds. Operable water-soluble $\alpha,\beta$-ethylenically unsaturated monomers include mono and polycarboxylic acids and acrylamide and its derivatives. Illustrative monocarboxylic acids are acrylic acid, methacrylic acid, crotonic acid and isocrotonic acid, as well as, alkali metal salts and ammonium salts thereof. Illustrative polycarboxylic acids would include maleic acid, fumaric acid and itaconic acid. Acrylamide derivatives would include methacrylamide and N,N-dimethylacrylamide. Preferred monomers are acrylic acid and methacrylic acid as well as their respective salt forms, such as, alkali metal or ammonium salts.

The concentration of monomer which is used in the reaction mixture effects the properties of the final polymer product. Desirable properties for the water absorption may include good gel strength, high absorbent capacity, fast rates of water absorption and low levels of water-soluble polymer. It is desirable to use a concentration of monomer which results in an efficient level of conversion of monomer to polymer together with desired polymer properties. Preferably, at least 80 percent conversion, more preferably at least 90 percent and most preferably at least 99 percent conversion.

The water-soluble, $\alpha,\beta$-ethylenically unsaturated monomers useful in the present invention may be used in amounts ranging from 10 weight percent to 80 weight percent based on the total weight of the aqueous monomer solution to be polymerized. Preferably, the amount of such monomers ranges from 10 percent to 60 percent based on the total weight of the aqueous monomer solution. Most preferably, water-soluble monomers may be used in amounts ranging from 15 weight percent to 40 weight percent based on the total weight of the aqueous monomer solution. Optionally, minor amounts of water-soluble unsaturated monomers other than carboxylic acids, salts of the acids, acrylamide or its derivatives may be present. For example, alkyl esters of the acid monomers such as methylacrylate or methylmethacrylate may be used as comonomers.

Conventional vinyl addition polymerization initiators are used in the polymerization of the water-soluble monomers and the crosslinker. The present invention can include conventional vinyl addition polymerization initiators so long as an effective amount of ascorbic acid, erythorbic acid and/or their metal salts are used as part of the redox initiator system.

An oxidizing agent, such as hydrogen peroxide, is employed together with the ascorbic acid or erythorbic acid which is the reducing agent of the redox initiator system pair. Water-soluble peroxides are preferred as oxidizing agents, other oxidizing agents such as potassium persulfate, ammonium persulfate, sodium persulfate, and alkali metal persulfate can also be used. The oxidizing agents can be present in an amount of 100 parts per million (ppm) to 5000 ppm by weight based on the weight of the water-soluble, $\alpha,\beta$-ethylenically unsaturated monomers. More preferably, the oxidizing agents can be present in an amount of 100 ppm to 2000 ppm by weight based on the weight of the water-soluble, $\alpha,\beta$-ethylenically unsaturated monomers. Depending upon the selection of reaction temperature and the type of monomer chosen, the oxidizing agents above can be used as thermal initiators. Additional thermal initiators include water-soluble azo compounds such as 2,2'-azobis(2-amidinopropane•HCl). The amount of total initiators used can range from 0.01 to 2 weight percent. Preferably, the amount of total initiators is 0.01 to 1.0 weight percent based on the weight of the total monomer reactants.

The most preferred redox initiator system is tertiary butyl hydrogen peroxide and erythorbic acid. Preferably, the tertiary butyl hydrogen peroxide is present in an amount of 100 to 150 ppm by weight based on the weight of the water-soluble, $\alpha,\beta$-ethylenically unsaturated monomers. The erythorbic acid is preferably present in an amount effective to initiate polymerization of the $\alpha,\beta$-ethylenically unsaturated monomers and the crosslinking monomer at an amount of 1200 to 2000 ppm by weight based on the weight of the water-soluble, $\alpha,\beta$-ethylenically unsaturated monomers. The amount of total initiators used can range from 0.01 to 2 weight percent. Preferably, the amount of total initiators is 0.01 to 1.0 weight percent based on the weight of the total monomer reactants.

The polymerization temperature for the polymerization using these initiators can be a relatively low temperature, as this in general increases the molecular weight of the resulting crosslinked polymer relative to that attained at higher temperatures. Thermal initiators operable in the preferred reaction temperature range are advantageous.

A. Types of Crosslinking Monomers:

Organic compounds having two or more ethylenic groups copolymerizable with the water-soluble monomers can be used as the crosslinking monomers. Exemplary crosslinking monomers include diacrylate or dimethacrylate esters of ethylene glycol, diethylene glycol, triethylene glycol, propylene glycol, 1,4-butane diol, 1,5-pentane diol, 1,6-hexane diol, neopentyl glycol, trimethylol propane and pentaerythritol; triacrylates or trimethacrylates of trimethylol propane and pentaerythritol; tetracrylates or tetramethacrylates of pentaerythritol; N,N'-methylene-bis-acrylamide, N,N'-methylene-bis-methacrylamide and triallyl isocyanurate, and the like.

The crosslinking monomer is present in the reaction mixture of water-soluble monomer in an amount effective to crosslink the polymer to the desired degree. Typically, the crosslinking monomer is used in amounts ranging from 0.0001 to 5 parts by weight based on 100 parts by weight of water-soluble monomer used. More preferably, the amount ranges from 0.01 to 2 parts by weight, and most preferably, from 0.02 to 1 part by weight, per 100 parts by weight of the water-soluble monomer. If an amount over 5 parts by weight of crosslinking monomer is used the resulting polymer generally has such a high crosslinking density that the water absorption capacity of the polymer is reduced. If the crosslinker is used in an amount less than 0.0001 part by weight, the polymer generally has too low a crosslinking density and when contacted with the fluid to be absorbed becomes sticky and exhibits a lower initial absorption rate. The preferred amount of crosslinking monomer is determined by the desired degree of absorption capacity and the gel strength desired to retain the absorbed fluid.

B. Typical Polymerization Conditions

For the aqueous solution copolymerization, according to the present invention, the water-soluble monomer, the crosslinking monomer, water and the initiator are mixed in a conventional manner prior to the copolymerization.

Mixing may be effected with static-in-line mixers or any other suitable mixing apparatus. The temperature during introduction of the polymerization initiator should be maintained such that the polymerization is not initiated prematurely, preferably, below the temperature of 40° C, more preferably below 35° C.

In a preferred embodiment of this invention, the level of water-solubles in the polymer from a monomer can be minimized by careful control of the temperature during the exothermic polymerization. Therefore, conducting the reaction under reduced pressure with agitation of the reactants is desirable to control temperature. The maximum reaction temperature for the polymerization when preferred initiators are used is in the range of 90° to 120° C. More preferably, the maximum temperature is in the range of 60° to 90° C. External cooling jackets alone are generally not effective to provide the desired reaction temperature control when a large reaction vessel is used with a gel-like reaction product.

The desirable method of drying comprises heating the polymer by hot air to a temperature of 50°C to 200°C optionally under reduced pressure for a period of time sufficient to reduce the moisture content of the hydrated polymer gel to below 40 percent, preferably below 4 percent based on the total weight of absorbent polymer.

The absorbent polymer composition obtained by drying the hydrated polymer gel under heat is suitably comminuted into coarse particles, granules or a powder depending upon the desired size. The method of pulverization is not generally critical and any method known in the art can be employed.

Agitation of the reaction medium during polymerization can also be used to control the particle size.

The absorbent polymer composition of the present invention has excellent performance characteristics. The polymer has a high degree of polymerization because it has been prepared from the gel-like hydrated polymer formed by copolymerization in an aqueous solution at a relatively high, solids concentration.

Additionally, the resulting hydrated polymer of the present invention breaks up more uniformly and with greater ease resulting in a higher per batch yield. The polymer composition exhibits a water-soluble polymer content of less than 20 percent, preferably less than 15 percent and most preferably less than 10 percent based on the total weight of the absorbent polymer.

## C. Initiator Temperature Dependence

When a thiosulfate initiator system is used, in order to obtain excellent polymer properties such as FSC and water-soluble polymer content, a comparatively warmer initial temperature is needed for the initiator to efficiently start the polymerization. However, the temperature during any polymerization of such monomers to produce aqueous absorbing polymers ideally should not rise to much greater than 85°C to ensure polymer quality. Where a vacuum cooling system used to remove heat is limited to removing only so much heat per unit time, if the heat output rate is greater than the removal rate, the temperature will exceed the desired target and polymer quality will suffer. Since a thiosulfate system must start at a comparatively higher initial temperature, the polymerization in such a system is slowed so the heat removal capacity of the equipment is not overtaxed. If the polymerization is slowed, the production capacity is likewise undesirably slowed.

The present erythorbate system, on the other hand, can initiate polymerization at a cooler temperature which enables the monomer to be cooled prior to polymerization. The same total amount of heat will be produced by the polymerization, but proportionately less will be released compared to a thiosulfate system, at higher temperatures thereby reducing the load on the heat removal equipment. Therefore, the polymerization rate for the erythorbate initiator system can be increased relative to the thiosulfate system without sacrificing polymer quality or slowing production capacity in many systems.

## D. Polymer Properties

Water-soluble polymer content is determined by extracting 1 gram of absorbent polymer at room temperature for 16 hours with 300 grams (g) of 0.9 percent aqueous sodium chloride. The swollen polymer is filtered off and the filtrate titrated with 0.1 Normal hydrochloric acid to determine the level of soluble polymer present.

The absorbent capacity is determined by allowing 1.0 g to absorb its limit of 300 g of a 0.9 percent aqueous sodium chloride solution in 20 minutes at room temperature. The excess salt solution which is not absorbed is weighed and subtracted from the original 300 g to give the FSC value. The absorbent polymer compositions of the present invention exhibit absorbent capacities of at least 10 g/g, more preferably at least 20 g/g, and most preferably at least 40 g/g. Absorbent capacities up to 80 g/g have been observed.

## Examples

The following example illustrates preparation of a polymer using a redox initiator system containing sodium erythorbate. The examples are not meant to limit the scope of the invention but are intended to be illustrative of the invention and the performance of polymers prepared by such a process.

## Example

In a 1-liter resin reaction kettle is dissolved 1.50 g (0.75 percent based on the weight of monomers) of trimethylolpropane triacrylate (TMPTA) in 200 g of acrylic acid. To this solution is added: 1.0 gram of VERSENEX® 80 chelating agent (40 percent aqueous solution of pentasodium salt of diethylenetriaminepentaacetic, available from The Dow Chemical Company); 1.0 gram of a 5 percent solution of polyvinyl alcohol in water; 433.0 gram of crushed ice; and 155.0 gram of a 50 percent solution of sodium hydroxide in water.

The solution is agitated at about 25°C while sparging the solution with nitrogen gas at a flow rate of approximately 518 ml per minute, for 90 minutes. To the solution is added 0.67 ml of a 30 percent aqueous solution of hydrogen peroxide, 1.00 ml of a 10 weight percent aqueous solution of 2,2′-azobis(2-amidinopropane)dihydrochloride (V-50 Wako Pure Chemistry Industry), 1.0 ml of a 10 percent by weight aqueous solution of sodium persulfate and 1.00 ml of a 10 percent aqueous solution of sodium erythorbate.

In a comparative experiment polymers are prepared as above however, instead of 1.0 ml of a 10 percent by weight aqueous solution of sodium persulfate and 1.00 ml of a 10 percent aqueous solution of sodium erythorbate as initiators, 2.00 ml of a 10 percent by weight aqueous solution of sodium persulfate and 4.23 ml of a 15 percent aqueous solution of sodium thiosulfate pentahydrate is added.

The reaction is allowed to proceed until complete as evidenced by complete conversion of the monomers to polymer. (Gelation generally occurs at about 1 percent conversion and is not indicative of complete reaction.) The gel is removed from the reactor and cut into small pieces which are then spread onto a nylon screen and dried in an oven at about 100° C for about an hour. After drying, the polymer is cooled to room temperature and pulverized in a Waring Commercial Blendor®.

The FSC is determined by allowing 1.0 g of the polymer to absorb its limit of 300 g of a 0.9 percent aqueous sodium chloride solution in 20 minutes. The excess salt solution which is not absorbed is weighed and subtracted from the original 300 g to give the FSC value.

Water-soluble polymer content is determined by extracting 1 g of absorbent polymer granules for 16 hours with 300 g of a 0.9 percent solution of aqueous sodium chloride. The swollen polymer is filtered off and the filtrate is titrated with hydrochloric acid to determine the level of soluble polymer present.

The polymer composition of this example exhibits an FSC of 45.6 g/g and a water-soluble polymer content of 4.1 percent. The comparative example exhibits an FSC of 48.7 g/g and a water-soluble polymer content of 5.5 percent.

The most significant difference between the erythorbate example system and the thiosulfate comparative example system is their respective dependencies on initial polymerization temperature. By decreasing the initial polymerization temperature from 30° C to 18° C, the time for the temperature of the reaction mixture to rise, (indicating the start of polymerization) is approximately 40 minutes for the thiosulfate system compared to 4 to 10 minutes for the erythorbate system. Similarly, when the initial polymerization temperature is decreased from 30° C to 18° C, the peak temperature during the polymerization occurs 10 minutes earlier for the erythorbate system as compared to 60 minutes for the thiosulfate system, indicating a longer polymerization time for the thiosulfate system when the initial polymerization temperature is lowered.

Thus, these differences illustrate the lesser temperature sensitivity for the erythorbate system as compared to the thiosulfate system.

If the erythorbate system initiates the polymerization at a cooler temperature in less time than the thiosulfate system, the same total amount of heat will be produced by the polymerization for the erythorbate system as for the thiosulfate system, but proportionately less heat will be released at higher temperatures thereby reducing the load on the heat removal equipment. Such differences amount to greater production efficiency for the erythorbate system when compared to a thiosulfate system.

## Claims

1. An improved process for producing a water-swellable polymer by polymerizing an aqueous solution of an $\alpha,\beta$-ethylenically unsaturated monomer and at least one crosslinking monomer, said process comprising initiating the polymerization with a redox initiator system comprising ascorbic acid, erythorbic acid or their metal salts.

2. The process of Claim 1 wherein said initiator is present in an amount of 1200 to 2000 ppm by weight based on the weight of said monomer and wherein the initiator system additionally comprises hydrogen peroxide.

3. The process of Claim 2 wherein the hydrogen peroxide is present in an amount of 100 to 150 ppm by weight based on the weight of the monomer.

4. The process of Claim 3 wherein the $\alpha,\beta$-ethylenically unsaturated monomer comprises acrylic acid in an amount of 10 to 80 weight percent based on the total weight of the aqueous monomer solution.

5. The process of Claim 4 wherein the crosslinking monomer is trimethylol propane triacrylate present in an amount of 0.0001 to 5 parts by weight based on 100 parts of the monomer.